(19) Europäisches Patentamt
European Patent Office
Office européen des brevets

(11) **EP 4 145 375 B1**

(12) **EUROPEAN PATENT SPECIFICATION**

(45) Date of publication and mention
of the grant of the patent:
**26.11.2025  Bulletin 2025/48**

(51) International Patent Classification (IPC):
**G06Q 50/02** (2024.01)     **G06Q 10/0635** (2023.01)
**G06Q 40/03** (2023.01)     **G06Q 40/08** (2012.01)

(21) Application number: **22173026.0**

(22) Date of filing: **12.05.2022**

(52) Cooperative Patent Classification (CPC):
**G06Q 50/02; G06Q 10/0635; G06Q 40/03;
G06Q 40/08**

(54) **METHOD AND SYSTEM FOR ASSESSING FARMER CREDIT WORTHINESS AND RISK ASSOCIATED WITH FARM**

VERFAHREN UND SYSTEM ZUR BEWERTUNG DER KREDITWÜRDIGKEIT VON LANDWIRTEN UND DES MIT DEM BETRIEB VERBUNDENEN RISIKOS

PROCÉDÉ ET SYSTÈME D'ÉVALUATION DE SOLVABILITÉ D'AGRICULTEURS ET DU RISQUE ASSOCIÉ À UNE FERME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2021  IN 202121039875**

(43) Date of publication of application:
**08.03.2023  Bulletin 2023/10**

(73) Proprietor: **Tata Consultancy Services Limited Maharashtra (IN)**

(72) Inventors:
• **SAKKAN, MARIAPPAN**
  **600113 Chennai, Tamil Nadu (IN)**
• **SARANGI, SANAT**
  **400601 Thane, Maharashtra (IN)**
• **PAPPULA, SRINIVASU**
  **500081 Hyderabad, Telangana (IN)**
• **SIVALINGAM, RAVINKUMAR**
  **600113 Chennai, Tamil Nadu (IN)**
• **MOHITE, JAYANTRAO**
  **400601 Thane West, Maharashtra (IN)**
• **SAWANT, SURYAKANT ASHOK**
  **400601 Thane West, Maharashtra (IN)**
• **MOHAN, SANTOSH KUMAR**
  **600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2005 288 941     US-A1- 2021 150 625**

• **GSM ASSOCIATION, GSM ASSOCIATION, GSMA FLOOR2 THE WALBROOK BUILDING 25 WALLBROOK LONDON, UK, 25 February 2020 (2020-02-25), XP040720703**
• **SIMUMBA NAOMI ET AL: "Alternative Scoring Factors using Non-Financial Data for Credit Decisions in Agricultural Microfinance", 2018 IEEE INTERNATIONAL SYSTEMS ENGINEERING SYMPOSIUM (ISSE), IEEE, 1 October 2018 (2018-10-01), pages 1 - 8, XP033456937, DOI: 10.1109/SYSENG.2018.8544442**

**Description**

CROSS-REFERENCE TO RELATED APPLICATIONS AND PRIORITY

The present application claims priority to Indian application no. 202121039875, filed on September 2, 2021.

TECHNICAL FIELD

The disclosure herein generally relates to the field of analyzing credibility of a farmer, and, more particularly, to a system and a method for assessing credit worthiness of farmers and risks associated with a farm.

BACKGROUND

Agriculture is a dominant sector for economies of several nations and credit plays an important role in increasing agriculture production. Availability and access to adequate, timely and low-cost credit from institutional sources is of great importance especially to small and marginal farmers. The lending institutions need to ensure that the farmer to which they providing the loans are credit worthy enough to repay the loan amount.

The agricultural lending decision making process is complex due to contractual and ownership arrangement issues, locational issues, and management quality and risk management issues. Credit risk is the largest risk faced by banks and financial institutions in agricultural loan, most of the financial institutions relied on subjective analysis or the so-called banker expert system to assess the credit risk of borrowers, however this method may be inconsistent in risk assessment and determination of credit worthiness. The degree of competition in agricultural lending will influence quantity and quality of loans made by the lending institutions.

Various methods have been used in the past to assess the credit worthiness of the farmer. Traditional cum banker's expert models may be inconsistent is assessing credit worthiness of farm, farmer in agricultural lending agency. No robust method in place to assess the farm credit risk associated with farm and farmer entrepreneurial quality on real time basis. Banker expert models relying on physical datasets, with manual intervention is not scalable and fail due to low reliability and accuracy. Another approach is the calculation of farm credit risk score, which is indicative of the credit worthiness of the farmer and risk associated with the farm, but even this approach has not been explored much. Document GSM ASSOCIATION discloses that agriculture dominates Myanmar's rural economy and makes a significant contribution to the national economy. It is the country's largest employer and accounts for over a quarter of gross domestic product (GDP). Crop procurement remains highly informal and depends largely on the intermediation of informal traders. The sector faces a variety of long-standing challenges that affect farmer livelihoods and limit opportunities for growth. The use of digital technologies in agriculture has allowed sector stakeholders to mitigate some of these challenges, including poor access to timely agronomic advice and underdeveloped value chain structures. Other pain points, like farmers' limited access to credit and associated low levels of financial inclusion, have been more persistent. Agricultural credit (e.g. for inputs and assets) and non-agricultural credit (e.g. for medical and education expenses) are both critical to meeting farmers' financing needs. Recently, innovative agritech companies, in collaboration with financial services providers (FSPs), have been testing the use of digital agriculture data for farmer credit scoring. If successful, agritech companies in Myanmar could play a key role in promoting financial inclusion for farmers. This report provides a snapshot of the agriculture sector and status of financial inclusion in Myanmar and examines ways in which recent agritech innovation is supporting rural communities to improve financial inclusion. The report also highlights emerging monetization models and the roles of agritech companies in the country.

SUMMARY

Embodiments of the present disclosure present technological improvements as solutions to one or more of the above-mentioned technical problems recognized by the inventors in conventional systems. For example, in one embodiment, a system for assessing credit worthiness of a farmer and risks associated with a farm is provided. The system comprises one or more satellites, an input/output interface, one or more hardware processors and a memory. The one or more satellites receives a remote satellite data sensed over a predefined period over the farm. The memory in communication with the one or more hardware processors, wherein the one or more first hardware processors are configured to execute programmed instructions stored in the one or more first memories, to: generate a farm resource map using the remote satellite data; obtain an agro-climatic (AC) zone data respective to the farm from a data repository; calculate a Know Your Customer Farm (KYCF) score using the farm resource map and the AC zone data, wherein the KYCF is indicative of quality of the farm; receive a set of socioeconomic parameters and a set of socio-personal parameters of the farmer via a questionnaire, wherein the questionnaire is filled up by the farmer; calculate a Know Your Farmer (KYF) score for the farmer using the set of socioeconomic parameters and the set of socio-personal parameters, wherein the KYF score indicative of the financial worthiness of the farmer; collect a first set of parameters from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer; calculate a Farmer entrepreneurship Quality (FEQ) score using the first set of parameters, wherein the FEQ score is indicative of the ability of the farmer to repay the loan; calculate a farm credit risk score in real time using the KYCF score, the KYF score and the FEQ score; and compare the calculated farm credit risk score with a predefined criterion to classify the credit worthiness of the farmer and risk associated with the farm as one of a high risk, a moderate risk or a low risk.

In another aspect, a method for assessing credit worthiness of the farmer and risks associated with a farm is provided. Initially, a remote satellite data sensed from one or more satellites over a predefined period over the farm is received. Further, a farm resource map is generated using the remote satellite data. In the next step, an agro-climatic (AC) zone data respective to the farm is obtained from a data repository. Further, a Know Your Customer Farm (KYCF) score is calculated using the farm resource map and the AC zone data, wherein the KYCF is indicative of quality of the farm. Later a set of socioeconomic parameters and a set of socio-personal parameters of the farmer are received via a questionnaire, wherein the questionnaire is filled up by the farmer. In the next step, a Know Your Farmer (KYF) score is calculated for the farmer using the set of socioeconomic parameters and the set of socio-personal parameters, wherein the KYF score indicative of the financial worthiness of the farmer. Further, a first set of parameters are collected from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer. In the next step, a Farmer entrepreneurship Quality (FEQ) score is calculated using the first set of parameters, wherein the FEQ score is indicative of the ability of the farmer to repay the loan. A farm credit risk score is then calculated in real time using the KYCF score, the KYF score and the FEQ score. And finally, the calculated farm credit risk score is compared with a predefined criterion to classify the credit worthiness of the farmer and risk associated with the farm as one of a high risk, a medium risk or a low risk.

In yet another aspect, one or more non-transitory machine-readable information storage mediums comprising one or more instructions which when executed by one or more hardware processors cause assessing credit worthiness of the farmer and risk associated with a farm is provided. Initially, a remote satellite data sensed from one or more satellites over a predefined period over the farm is received. Further, a farm resource map is generated using the remote satellite data. In the next step, an agro-climatic (AC) zone data respective to the farm is obtained from a data repository. Further, a Know Your Customer Farm (KYCF) score is calculated using the farm resource map and the AC zone data, wherein the KYCF is indicative of quality of the farm. Later a set of socioeconomic parameters and a set of socio-personal parameters of the farmer are received via a questionnaire, wherein the questionnaire is filled up by the farmer. In the next step, a Know Your Farmer (KYF) score is calculated for the farmer using the set of socioeconomic parameters and the set of socio-personal parameters, wherein the KYF score indicative of the financial worthiness of the farmer. Further, a first set of parameters are collected from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer. In the next step, a Farmer entrepreneurship Quality (FEQ) score is calculated using the first set of parameters, wherein the FEQ score is indicative of the ability of the farmer to repay the loan. A farm credit risk score is then calculated in real time using the KYCF score, the KYF score and the FEQ score. And finally, the calculated farm credit risk score is compared with a predefined criterion to classify the credit worthiness of the farmer and risk associated with the farm as one of a high risk, a medium risk or a low risk.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a network diagram of a system for assessing credit worthiness of a farmer and risk associated with a farm according to some embodiments of the present disclosure;

FIG. 2 is a functional block diagram of the system for assessing credit worthiness of the farmer and risk associated with the farm according to some embodiments of the present disclosure; and

FIG. 3 is a flow diagram illustrating a method for assessing credit worthiness of the farmer and risk associated with the farm in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The agricultural lending decision making process is complex due to contractual and ownership arrangement issues, locational issues, and management quality and risk management issues. Credit risk is the largest risk faced by banks and financial institutions in agricultural loan, most of the financial institutions relied on subjective analysis to assess the credit risk of borrowers, however this method may be inconsistent in risk assessment and determination of credit worthiness.

Most of the existing prior art focuses on farmer personal, socioeconomic characteristics, land attributes and remote sensing data approach for assessing credit worthiness of farmer and no work has been carried out in assessing credit worthiness using deep insights like farm health, farmer economics and entrepreneurship characteristics of a farmer. These methods are not taking into account of key farm health parameters, farmer entrepreneurial traits to determine credit worthiness. The existing work does not consider use of farm health, farmer economic ability and farmer entrepreneurial characteristics for assessing credit worthiness.

The present disclosure provides a method and a system for assessing credit worthiness of the farmer and risks associated with a farm. The credit worthiness of the farmer and risks associated with farm is assessed by aggregating data which significantly influence the farmer credit repayment ability and intension. The system and method are configured to calculate farm credit risk score based on the farm capability, farmer socio economic traits and their entrepreneurial quality which helps to assess credit worthiness of a farmer accurately. The farmer credit worthiness is analyzed using satellite data, field data from the farm and risk associated with them. The farm credit risk score is calculated in real time basis to every farm loan sanctioned by the lending institutions to safeguard their loan loss and non-performing loans.

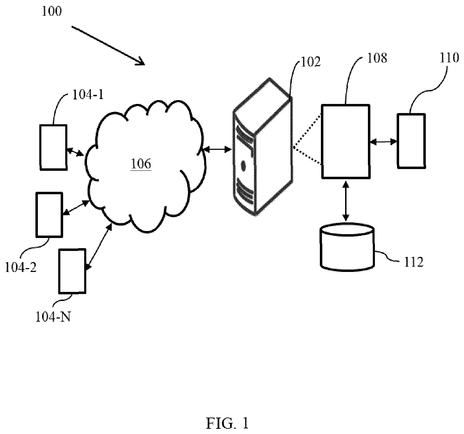

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

According to an embodiment of the disclosure, FIG. 1 illustrates a network diagram of a system 100 for assessing credit worthiness of the farmer and risk associated with a farm. The system 100 is configured to provide a robust method for assessing credit risk and credit eligibility of borrowers with the help of farm health and farmers entrepreneurship quality. The system 100 is configured to calculate a farm credit risk score (FCRS). The farm credit risk score is accurately and precisely predicted by collecting ground data, sky data for analyzing farm health, farmer identity and entrepreneur quality to underwrite farm loans. The credit check is performed in real time basis to keep track of end use of the loan of borrower by the bank in order to mitigate loan default.

It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104, collectively referred to as I/O interface 104 or user interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

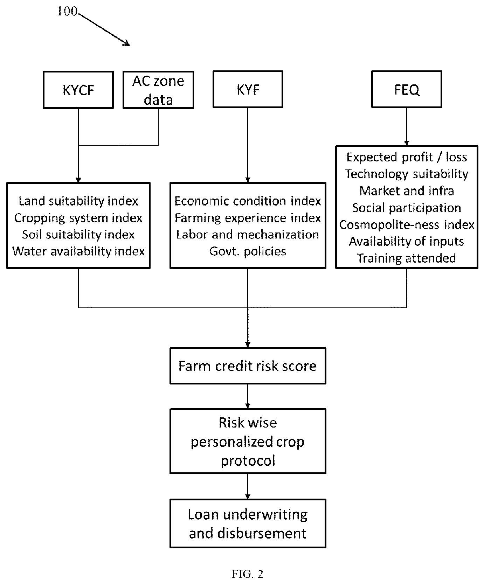

A functional block diagram of the system 100 for assessing credit worthiness of the farmer and the risk associated with the farm is shown in FIG. 2. According to an embodiment of the disclosure, the system 100 is configured to calculate three scores. 1) a Know Your Customer Farm (KYCF) score, 2) a Know Your Farmer (KYF) score, and 3) a Farmer entrepreneurship Quality (FEQ). The KYCF is indicative of quality of the farm. The KYF score is indicative of the financial worthiness of the farmer. The FEQ score is indicative of the ability of the farmer to repay the loan.

According to an embodiment of the disclosure, the system 100 takes satellite data as an input data from one or more satellites 114. The satellite data can be used to get the information about the quality of the farms. The satellites used may include but not limited to Sentinel 1, Sentinel 2 and Landsat 8 etc. In an embodiment of the present disclosure, the one or more processors 108 are configured to identify a type of the one or more crops cultivated on a specific land based on the one or more satellite images. For instance, the system 100 may employ and execute one or more machine learning (ML) algorithms (e.g., as known in the art ML algorithms) for crop detection. For instance, type of crop may comprise, but are not limited to rice, wheat, sugarcane, grapes, and the like.

The satellite data received from various satellites is used to prepare a land resource map. For any region, the satellite data is used to detect the type of crop grown on the field for past consecutive years. In addition to this, for each season, the farm credit risk score is estimated and its capability for crop production during the forthcoming season. Different risk category obtained to classify a farmer based on their farm, farmer capability such as KYF and FEQ while availing the loan. If any farmer wants to avail more than proposed loan amount the farmer may have to provide a security or deviation matrix could be applied to disburse loan. In an example the farm credit risk score is a function of the KYCF score, the KYF score and the FEQ score in the proportion of 50:20:30 as shown in equation (1):

$$\text{Farm credit score (FCR)} = f(\text{KYCF (50\%), KYF (20 \%), FEQ (30\%))} \ \dots \ (1)$$

According to an embodiment of the disclosure, the system 100 is also configured to create a set of risk categories based on farm quality, farmer characters and entrepreneurial quality for availing loan from the banks. The farm credit risk score for each farm has been generated based on the satellite data analysis and given to credit managers of the banks to underwrite loan accurately and efficiently. The farm credit risk score (FCRS) is calculated based on the range of the score generated by combining the KYCF score, the KYF score and the FEQ score. In an example the FCRS can be calculated between 0 and 1000. So, if the FCRS is more than 850 then it is no risk and loan can be disbursed without any risk. If the FCRS is between 750 and 850 then it is moderately risk, if the FCRS is between 500 and 750 then it is low risk and if the score is less than 500 then it is highly risky to disburse the loan.

According to an embodiment of the disclosure, the system 100 is also configured for the assessment of inherited credit risk associated with the farmer based on farmer's socio-economic characteristics like cash flow, agriculture and allied activities, experience in farming, educational qualification, family size and their primary, secondary occupation to repayment of the loan.

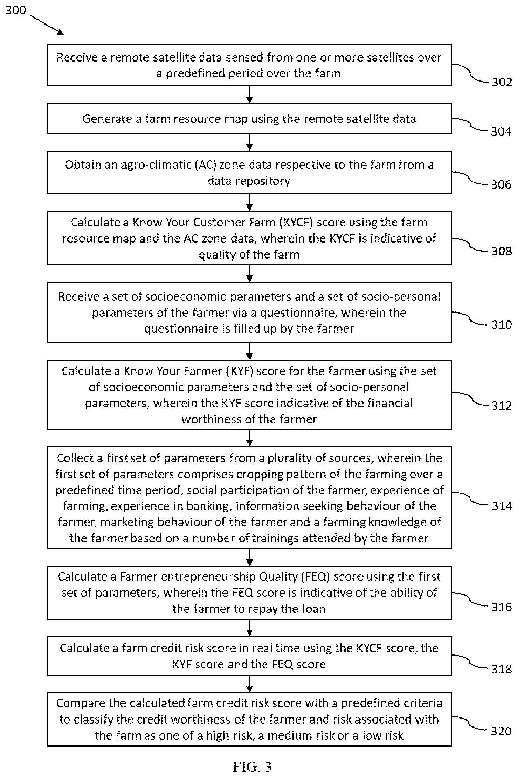

FIG. 3 illustrates an example flow chart of a method 300 for method and system for assessing farmer credit worthiness and risk associated with farm, in accordance with an example embodiment of the present disclosure. The method 300 depicted in the flow chart may be executed by a system, for example, the system 100 of FIG. 1. In an example embodiment, the system 100 may be embodied in a computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 300 are described with help of system 100. However, the operations of the method 300 can be described and/or practiced by using any other system.

Initially at step 302 of the method 300, a remote satellite data sensed from one or more satellites over a predefined period over the farm is received. At step 304, a farm resource map is generated using the remote satellite data. The farm resource map is a digital map of farm critical resources like soil & water to understand crop production potentiality of the farm. The farm resource map comprises: a) Soil type and land suitable for farming and b) Water source and type of irrigation & method of irrigation, for example, canal irrigation, drip method of irrigation etc.(c) Cattle shed, Farm pond, Compost pit etc.

At step 306 of the method 300, an agro-climatic (AC) zone data respective to the farm is obtained from the data repository 112. Food and agriculture organization (FAO) has defined the agro-climatic zone as a land unit represented accurately or precisely in terms of major climate and growing period, which is climatically suitable for certain range of crops and cultivars. In other words, it is an extension of the climate classification keeping in view the suitability to agriculture.

Further at step 308 of the method 300, the Know Your Customer Farm (KYCF) score is calculated using the farm resource map and the AC zone data. The KYCF is indicative of quality of the farm. The KYCF score is dependent of various other factors. There are index points associated with each of the factors. These factors comprise:

- Geo-reference data of the farm comprising plot map, latitude, longitude, size of the land, type of land like irrigated land or dry land.
- Farm resource map comprising Soil, Land and water resource like irrigation source, compost pit, farm pond, cattle shed.
- Digital soil map comprising type and color of soil, soil test report, alkaline / acidic / saline soil.
- Present or previous crop pattern comprising suitable crop grown, agroclimatic zone, crop / variety.
- Climatic conditions comprising extreme conditions such as flood, cyclone, heatwave cold wave etc.
- Accessibility of the farm comprising transport, irrigation facilities, farm operation etc.

In the next step 310 of the method 300, a set of socioeconomic parameters and a set of socio-personal parameters of the farmer are received via a questionnaire. The questionnaire is filled up by the farmer before taking the loan.

The set of socioeconomic parameters and the set of socio-personal parameters provides socio economic characteristics of the farmers. The set of socioeconomic parameters comprises family income, non-farming related income, machinery possession, micro-irrigation or cultivable area etc. The set of socio-personal parameters comprise personal parameters like family size (less than 5 or more than 5), family type (nuclear / j oint), primary occupation of the farmer, secondary occupation, mobile phone model, educational qualification of the farmer and economic parameters like cash flow, annual income from agriculture, allied activities, type of loan availed, loan due amount and loan default amount. A separate index points are assigned to the set of socioeconomic parameters and the set of socio-personal parameters.

Further at step 312 of the method 300, the Know Your Farmer (KYF) score is calculated for the farmer using the set of socioeconomic parameters and the set of socio-personal parameters. The KYF score is indicative of the financial worthiness of the farmer.

At step 314 of the method 300, a first set of parameters is collected from a plurality of sources. The first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer. The trainings may comprise one or more of training on commercial crop, training on food crops, training on entrepreneurship or training on IPM.

According to an embodiment of the disclosure, the first set of parameters is also collected from crowdsourcing. The crowdsourcing data comprises:

- Cropping pattern comprising mono cropping, mixed cropping, commercial cropping, food crops, cropping intensity etc. This results in generation of a cropping pattern index.
- Social participation comprising member of farm field school, member of farmer group, Member of Krishi Vigyan Kendra (KVK) or Farm Science Centre, member of farm club, member of Farmer Producer Organizations (FPO) etc. This results in generation of a social participation index.
- Farming experience (in number of years). This results in generation of a farming ability index.
- Banking experience comprising number of years in the bank, bank account type, type of loan availed, loan dues, Kisan credit card holder etc. This results in generation of a credit habit index.
- Information seeking behaviour comprising mobile, print media, TV/radio, social media, traditional farming, modern farming, traditional cum modern farm etc. This results in generation of a cosmopolite-ness index.
- Marketing behaviour comprising retailer, wholesaler or both, transport by own, transport by lease vehicle etc. This results in generation of a marketability index.
- Various trainings attended by the farmer. This results in generation of a farming knowledge index.

Based on the above information obtained from the crowdsourcing index points are assigned to various index mentioned above.

At step 316 of the method 300, the Farmer entrepreneurship Quality (FEQ) score is calculated using the first set of parameters, wherein the FEQ score is indicative of the ability of the farmer to repay the loan.

The system and method also assess farmer entrepreneurship quality of a farmer by collecting data from farmers using mobile app social participation, crop and variety selection, method of cultivation, major pest. major disease, history of calamity, cosmopolitans, source of credit, information seeking behavior, machinery possession, knowledge on farming, type of insurance, govt policy and scheme, marketability and infrastructure.to study their ability to repayment of loan be calculated on the rating infrastructure.to study their ability to repayment of loan be calculated on the rating scale method to arrive FEQ score card maximum points up to 300.ethod to arrive FEQ score card maximum points up to 300.

Further step 318 of the method 300, a farm credit risk score is calculated in real-time using the KYCF score, the KYF score and the FEQ score. And finally, at step 320 of the method 300, the calculated farm credit risk score is compared with a predefined criterion to classify the credit worthiness of the farmer and risk associated with the farm as one of a high risk, a moderate risk or a low risk. In an example, criteria can be chosen as follows: The farm credit risk score (FCRS) is < 500 - high risk, FCRS is 500-600 - moderate risk, FCRS is 600-750 - low risk, FCRS > 750 - very low risk.

According to an embodiment of the disclosure, a risk mitigation strategy can also be recommended in terms of a personalized crop protocol. If the farmer risk category is high and is recommended to issue loan with caution and recommended to follow the Personalized crop protocol recommended by the system mandatorily. whereas the moderate & low risk category farmer will also be recommended to follow the personalized crop protocol mandatorily, Low risky farmers are optional to follow up the crop protocol to mitigate the risk.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of assessing the risk associated with the farmer before lending a loan. The embodiment thus provides a method and system for assessing credit worthiness of the farmer and risk associated with the farm.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1.  A processor implemented method (300) for assessing credit worthiness of a farmer and risks associated with a farm, the method comprising:

    receiving, via one or more hardware processors (108), a remote satellite data sensed from one or more satellites (114) over a predefined period over the farm (302), wherein the one or more satellites comprises Sentinel-1, Sentinel-2, Landsat-5, Landsat-6, and Landsat-7;

    generating, via the one or more hardware processors (108), a farm resource map using the remote satellite data (304), wherein the farm resource map is a digital map of resources generated to understand crop production potentiality of the farm, and wherein the farm resource map comprises: (a) soil type and land suitable for farming, (b) water source, type of irrigation, and method of irrigation (c) cattle shed, farm pond, and compost pit;

    obtaining, via the one or more hardware processors (108), an agro-climatic (AC) zone data respective to the farm from a data repository (306);

    calculating, via the one or more hardware processors (108), a Know Your Customer Farm (KYCF) score using the farm resource map, the AC zone data, geo-reference data of the farm comprising plot map, latitude, longitude, size of a land, type of land like irrigated land or dry land, a digital soil map comprising type and color of soil, soil test report, alkaline or acidic or saline soil, and present or previous crop pattern comprising suitable crop grown, crop variety, wherein the KYCF is indicative of quality of the farm (308);

    receiving, via the one or more hardware processors (108), a set of socioeconomic parameters and a set of socio-personal parameters of the farmer via a questionnaire, wherein the questionnaire is filled up by the farmer (310);

    calculating, via the one or more hardware processors (108), a Know Your Farmer (KYF) score for the farmer using the set of socioeconomic parameters and the set of socio-personal parameters, wherein the KYF score indicative of the financial worthiness of the farmer (312);

    collecting, via the one or more hardware processors (108), a first set of parameters from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer (314);

    calculating, via the one or more hardware processors (108), a Farmer entrepreneurship Quality (FEQ) score using the first set of parameters, wherein the FEQ score is indicative of ability of the farmer to repay the loan (316);

    calculating, via the one or more hardware processors, a farm credit risk score in real time using the KYCF score, the KYF score and the FEQ score (318); and

    comparing, via the one or more hardware processors (108), the calculated farm credit risk score with a predefined criterion to classify the credit worthiness of the farmer and risks associated with the farm as one of a high risk, a medium risk or a low risk (320).

2.  The method of claim 1, wherein the set of socio-personal parameters comprises family size of the farmer, family type of the farmer, educational qualification of the farmer, primary occupation of the farmer, secondary occupation of the farmer, women member in the family and farming experience.

3.  The method of claim 1 further comprising recommending a personalized crop protocol depending on the classified risk.

4.  The method of claim 1, wherein the set of socioeconomic parameters comprises a set phone model, economic parameters of the farmer comprising cash flow, annual income from agriculture, annual income from non-agricultural activities, type of loan availed, loan due amount and loan default.

5.  A system (100) for assessing credit worthiness of a farmer and risk associated with a farm, the system comprises:

    one or more satellites (114) for receiving a remote satellite data sensed over a predefined period over the farm, wherein the one or more satellites (114) comprises Sentinel-1, Sentinel-2, Landsat-5, Landsat-6, and Landsat-7;

an input/output interface (104);
one or more hardware processors (108); and
a memory (110) in communication with the one or more hardware processors, wherein the one or more first hardware processors are configured to execute programmed instructions stored in the one or more first memories, to:

generate a farm resource map using the remote satellite data, wherein the farm resource map is a digital map of resources generated to understand crop production potentiality of the farm, and wherein the farm resource map comprises: (a) soil type and land suitable for farming, (b) water source, type of irrigation, and method of irrigation (c) cattle shed, farm pond, and compost pit;
obtain an agro-climatic (AC) zone data respective to the farm from a data repository;
calculate a Know Your Customer Farm (KYCF) score using the farm resource map and the AC zone data, geo-reference data of the farm comprising plot map, latitude, longitude, size of a land, type of land like irrigated land or dry land, a digital soil map comprising type and color of soil, soil test report, alkaline or acidic or saline soil, and present or previous crop pattern comprising suitable crop grown, crop variety, wherein the KYCF is indicative of quality of the farm;
receive a set of socioeconomic parameters and a set of socio-personal parameters of the farmer via a questionnaire, wherein the questionnaire is filled up by the farmer;
calculate a Know Your Farmer (KYF) score for the farmer using the set of socioeconomic parameters and the set of socio-personal parameters, wherein the KYF score indicative of the financial worthiness of the farmer;
collect a first set of parameters from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer;
calculate a Farmer entrepreneurship Quality (FEQ) score using the first set of parameters, wherein the FEQ score is indicative of ability of the farmer to repay the loan;
calculate a farm credit risk score in real time using the KYCF score, the KYF score and the FEQ score; and
compare the calculated farm credit risk score with a predefined criterion to classify the credit worthiness of the farmer and risk associated with the farm as one of a high risk, a moderate risk or a low risk.

6. The system of claim 5, wherein the set of socio-personal parameters comprises family size of the farmer, family type of the farmer, educational qualification of the farmer, primary occupation of the farmer, secondary occupation of the farmer, women member in the family and farming experience.

7. The system of claim 5 further configured to provide a recommendation to follow a personalized crop protocol depending on the classified risk.

8. The system of claim 5, wherein the set of socioeconomic parameters comprises a set phone model, economic parameters of the farmer comprising cash flow, annual income from agriculture, annual income from non-agricultural activities, type of loan availed, loan due amount and loan default.

9. One or more non-transitory machine-readable information storage mediums comprising one or more instructions which when executed by one or more hardware processors cause:

receiving, via a one or more hardware processors (108), a remote satellite data sensed from one or more satellites (114) over a predefined period over the farm;
generating, , via the one or more hardware processors (108), a farm resource map using the remote satellite data, wherein the farm resource map is a digital map of resources generated to understand crop production potentiality of the farm, and wherein the farm resource map comprises: (a) soil type and land suitable for farming, (b) water source, type of irrigation, and method of irrigation (c) cattle shed, farm pond, and compost pit;
obtaining, via the one or more hardware processors (108), an agro-climatic (AC) zone data respective to the farm from a data repository;
calculating, via the one or more hardware processors (108), a Know Your Customer Farm (KYCF) score using the farm resource map and the AC zone data, geo-reference data of the farm comprising plot map, latitude, longitude, size of a land, type of land like irrigated land or dry land, a digital soil map comprising type and color of soil, soil test report, alkaline or acidic or saline soil, and present or previous crop pattern comprising suitable crop grown, crop variety, wherein the KYCF is indicative of quality of the farm;
receiving, via the one or more hardware processors (108), a set of socioeconomic parameters and a set of socio-personal parameters of the farmer via a questionnaire, wherein the questionnaire is filled up by the farmer;

calculating, via the one or more hardware processors (108), a Know Your Farmer (KYF) score for the farmer using the set of socioeconomic parameters and the set of socio-personal parameters, wherein the KYF score indicative of the financial worthiness of the farmer;

collecting, via the one or more hardware processors (108), a first set of parameters from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer;

calculating, via the one or more hardware processors (108), a Farmer entrepreneurship Quality (FEQ) score using the first set of parameters, wherein the FEQ score is indicative of ability of the farmer to repay the loan;

calculating, via the one or more hardware processors (108), a farm credit risk score in real time using the KYCF score, the KYF score and the FEQ score; and

comparing, via the one or more hardware processors (108), the calculated farm credit risk score with a predefined criterion to classify the credit worthiness of the farmer and risks associated with the farm as one of a high risk, a medium risk or a low risk.

10. The one or more non-transitory machine-readable information storage mediums of claim 9, wherein the set of socio-personal parameters comprises family size of the farmer, family type of the farmer, educational qualification of the farmer, primary occupation of the farmer, secondary occupation of the farmer, women member in the family and farming experience.

11. The one or more non-transitory machine-readable information storage mediums of claim 9 further comprising recommending a personalized crop protocol depending on the classified risk.

12. The one or more non-transitory machine-readable information storage mediums of claim 9, wherein the set of socioeconomic parameters comprises a set phone model, economic parameters of the farmer comprising cash flow, annual income from agriculture, annual income from non-agricultural activities, type of loan availed, loan due amount and loan default.

## Patentansprüche

1. Prozessorimplementiertes Verfahren (300) zum Bewerten der Kreditwürdigkeit eines Landwirts und der mit einem landwirtschaftlichen Betrieb verbundenen Risiken, wobei das Verfahren Folgendes umfasst:

Empfangen, über einen oder mehrere Hardwareprozessoren (108), von Fernsatellitendaten, die von einem oder mehreren Satelliten (114) über einen vordefinierten Zeitraum über den landwirtschaftlichen Betrieb (302) erfasst werden, wobei der eine oder die mehreren Satelliten Sentinel-1, Sentinel-2, Landsat-5, Landsat-6 und Landsat-7 umfassen;

Erzeugen, über den einen oder die mehreren Hardwareprozessoren (108), einer landwirtschaftlichen Ressourcenkarte unter Verwendung der Fernsatellitendaten (304), wobei die landwirtschaftliche Ressourcenkarte eine digitale Karte von Ressourcen ist, die erzeugt wird, um das Ernteproduktionspotenzial des landwirtschaftlichen Betriebs zu verstehen, und wobei die landwirtschaftliche Ressourcenkarte Folgendes umfasst: (a) Bodenart und Land, die für den landwirtschaftlichen Betrieb geeignet sind, (b) Wasserquelle, Bewässerungsart und Bewässerungsverfahren, (c) Viehstall, landwirtschaftlicher Teich und Kompostgrube;

Erhalten, über den einen oder die mehreren Hardwareprozessoren (108), von agroklimatischen (Agro-Climatic, AC) Zonendaten, die sich auf den landwirtschaftlichen Betrieb beziehen, aus einem Datenspeicher (306);

Berechnen, über den einen oder die mehreren Hardwareprozessoren (108), einer Know Your Customer Farm (KYCF)-Punktzahl unter Verwendung der landwirtschaftlichen Ressourcenkarte, der AC-Zonendaten, Georeferenzdaten des landwirtschaftlichen Betriebs, die Plotkarte, Breitengrad, Längengrad, Größe eines Landes, Art von Land wie bewässertes Land oder trockenes Land umfassen, einer digitalen Bodenkarte, die Art und Farbe des Bodens, Bodentestbericht, alkalischen oder sauren oder salzhaltigen Boden und gegenwärtiges oder vorheriges Erntemuster umfasst, das geeignete angebaute Ernte, Erntesorte umfasst, wobei die KYCF die Qualität des landwirtschaftlichen Betriebs angibt (308);

Empfangen, über den einen oder die mehreren Hardwareprozessoren (108), eines Satzes von sozioökonomischen Parametern und eines Satzes von soziopersönlichen Parametern des Landwirts über einen Fragebogen, wobei der Fragebogen vom Landwirt aufgefüllt wird (310);

Berechnen, über den einen oder die mehreren Hardwareprozessoren (108), einer Know Your Farmer (KYF)-Punktzahl für den Landwirt unter Verwendung des Satzes von sozioökonomischen Parametern und des Satzes von soziopersönlichen Parametern, wobei die KYF-Punktzahl die finanzielle Wertigkeit des Landwirts angibt (312);

Sammeln, über den einen oder die mehreren Hardwareprozessoren (108), eines ersten Satzes von Parametern aus einer Mehrzahl von Quellen, wobei der erste Satz von Parametern Erntemuster des landwirtschaftlichen Betriebs über einen vordefinierten Zeitraum, soziale Beteiligung des Landwirts, Erfahrung des landwirtschaftlichen Betriebs, Erfahrung im Bankwesen, informationssuchendes Verhalten des Landwirts, Marketingverhalten des Landwirts und landwirtschaftliches Wissen des Landwirts auf Grundlage einer Anzahl von vom Landwirt besuchten Schulungen umfasst (314);

Berechnen, über den einen oder die mehreren Hardwareprozessoren (108), einer Farmer Entrepreneurship Quality (FEQ)-Punktzahl unter Verwendung des ersten Satzes von Parametern, wobei die FEQ-Punktzahl die Fähigkeit des Landwirts angibt, das Darlehen zurückzuzahlen (316);

Berechnen, über den einen oder die mehreren Hardwareprozessoren, einer landwirtschaftlichen Kreditrisikopunktzahl in Echtzeit unter Verwendung der KYCF-Punktzahl, der KYF-Punktzahl und der FEQ-Punktzahl (318); und

Vergleichen, über den einen oder die mehreren Hardwareprozessoren (108), der berechneten landwirtschaftlichen Kreditrisikopunktzahl mit einem vordefinierten Kriterium, um die Kreditwürdigkeit des Landwirts und die mit dem landwirtschaftlichen Betrieb verbundenen Risiken als eines von einem hohen Risiko, einem mittleren Risiko oder einem niedrigen Risiko zu klassifizieren (320).

2. Verfahren nach Anspruch 1, wobei der Satz von soziopersönlichen Parametern Familiengröße des Landwirts, Familientyp des Landwirts, Bildungsqualifikation des Landwirts, primären Beruf des Landwirts, sekundären Beruf des Landwirts, weibliches Mitglied in der Familie und landwirtschaftliche Erfahrung umfasst.

3. Verfahren nach Anspruch 1, ferner umfassend das Empfehlen eines personalisierten Ernteprotokolls in Abhängigkeit vom klassifizierten Risiko.

4. Verfahren nach Anspruch 1, wobei der Satz von sozioökonomischen Parametern ein Set-Phone-Modell umfasst, wobei die ökonomischen Parameter des Landwirts Cashflow, Jahreseinkommen aus der Landwirtschaft, Jahreseinkommen aus nichtlandwirtschaftlichen Aktivitäten, Typ des Darlehens, das verfügbar ist, Darlehensgebührenbetrag und Darlehensausfall umfassen.

5. System (100) zum Beurteilen der Kreditwürdigkeit eines Landwirts und des mit einem landwirtschaftlichen Betrieb verbundenen Risikos, wobei das System Folgendes umfasst:

einen oder mehrere Satelliten (114) zum Empfangen von Fernsatellitendaten, die über einen vordefinierten Zeitraum über den landwirtschaftlichen Betrieb erfasst werden, wobei der eine oder die mehreren Satelliten (114) Sentinel-1, Sentinel-2, Landsat-5, Landsat-6 und Landsat-7 umfassen;

eine Eingabe-/Ausgabeschnittstelle (104);

einen oder mehrere Hardwareprozessoren (108); und

einen Speicher (110) in Kommunikation mit dem einen oder den mehreren Hardwareprozessoren, wobei der eine oder die mehreren ersten Hardwareprozessoren konfiguriert sind, um programmierte Anweisungen auszuführen, die in dem einen oder den mehreren ersten Speichern gespeichert sind, um:

eine landwirtschaftliche Ressourcenkarte unter Verwendung der Fernsatellitendaten zu erzeugen, wobei die landwirtschaftliche Ressourcenkarte eine digitale Karte von Ressourcen ist, die erzeugt wird, um das Ernteproduktionspotenzial des landwirtschaftlichen Betriebs zu verstehen, und wobei die landwirtschaftliche Ressourcenkarte Folgendes umfasst: (a) Bodenart und Land, die für den landwirtschaftlichen Betrieb geeignet sind, (b) Wasserquelle, Bewässerungsart und Bewässerungsverfahren, (c) Viehstall, landwirtschaftlicher Teich und Kompostgrube;

erhalten von agroklimatischen (Agro-Climatic, AC) Zonendaten, die sich auf den landwirtschaftlichen Betrieb beziehen, aus einem Datenspeicher;

Berechnen einer Know Your Customer Farm (KYCF)-Punktzahl unter Verwendung der landwirtschaftlichen Ressourcenkarte und der AC-Zonendaten, Georeferenzdaten des landwirtschaftlichen Betriebs, die Plotkarte, Breitengrad, Längengrad, Größe eines Landes, Art von Land wie bewässertes Land oder trockenes Land umfassen, einer digitalen Bodenkarte, die Art und Farbe des Bodens, Bodentestbericht, alkalischen oder sauren oder salzhaltigen Boden und gegenwärtiges oder vorheriges Erntemuster umfasst, das geeignete angebaute Ernte, Erntesorte umfasst, wobei die KYCF die Qualität des landwirtschaftlichen Betriebs angibt;

Empfangen eines Satzes von sozioökonomischen Parametern und eines Satzes von soziopersönlichen Parametern des Landwirts über einen Fragebogen, wobei der Fragebogen vom Landwirt aufgefüllt wird;

Berechnen einer Know Your Farmer (KYF)-Punktzahl für den Landwirt unter Verwendung des Satzes von sozioökonomischen Parametern und des Satzes von soziopersönlichen Parametern, wobei die KYF-Punktzahl die finanzielle Wertigkeit des Landwirts angibt;

Sammeln eines ersten Satzes von Parametern aus einer Mehrzahl von Quellen, wobei der erste Satz von Parametern Erntemuster des landwirtschaftlichen Betriebs über einen vordefinierten Zeitraum, soziale Beteiligung des Landwirts, Erfahrung des landwirtschaftlichen Betriebs, Erfahrung im Bankwesen, informationssuchendes Verhalten des Landwirts, Marketingverhalten des Landwirts und landwirtschaftliches Wissen des Landwirts auf Grundlage einer Anzahl von vom Landwirt besuchten Schulungen umfasst;

Berechnen einer Farmer Entrepreneurship Quality (FEQ)-Punktzahl unter Verwendung des ersten Satzes von Parametern, wobei die FEQ-Punktzahl die Fähigkeit des Landwirts angibt, das Darlehen zurückzuzahlen;

Berechnen einer landwirtschaftlichen Kreditrisikopunktzahl in Echtzeit unter Verwendung der KYCF-Punktzahl, der KYF-Punktzahl und der FEQ-Punktzahl; und

Vergleichen der berechneten landwirtschaftlichen Kreditrisikopunktzahl mit einem vordefinierten Kriterium, um die Kreditwürdigkeit des Landwirts und das mit dem landwirtschaftlichen Betrieb verbundene Risiko als eines von einem hohen Risiko, einem mittleren Risiko oder einem niedrigen Risiko zu klassifizieren.

6. System nach Anspruch 5, wobei der Satz von soziopersönlichen Parametern Familiengröße des Landwirts, Familientyp des Landwirts, Bildungsqualifikation des Landwirts, primären Beruf des Landwirts, sekundären Beruf des Landwirts, weibliches Mitglied in der Familie und landwirtschaftliche Erfahrung umfasst.

7. System nach Anspruch 5, ferner konfiguriert, um eine Empfehlung bereitzustellen, um einem personalisierten Ernteprotokoll in Abhängigkeit vom klassifizierten Risiko zu folgen.

8. System nach Anspruch 5, wobei der Satz von sozioökonomischen Parametern ein Set-Phone-Modell umfasst, wobei die ökonomischen Parameter des Landwirts Cashflow, Jahreseinkommen aus der Landwirtschaft, Jahreseinkommen aus nichtlandwirtschaftlichen Aktivitäten, Typ des Darlehens, das verfügbar ist, Darlehensgebührenbetrag und Darlehensausfall umfassen.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:

Empfangen, über einen oder mehrere Hardwareprozessoren (108), von Fernsatellitendaten, die von einem oder mehreren Satelliten (114) über einen vordefinierten Zeitraum über den landwirtschaftlichen Betrieb erfasst werden;

Erzeugen, über den einen oder die mehreren Hardwareprozessoren (108), einer landwirtschaftlichen Ressourcenkarte unter Verwendung der Fernsatellitendaten, wobei die landwirtschaftliche Ressourcenkarte eine digitale Karte von Ressourcen ist, die erzeugt wird, um das Ernteproduktionspotenzial des landwirtschaftlichen Betriebs zu verstehen, und wobei die landwirtschaftliche Ressourcenkarte Folgendes umfasst: (a) Bodenart und Land, die für den landwirtschaftlichen Betrieb geeignet sind, (b) Wasserquelle, Bewässerungsart und Bewässerungsverfahren, (c) Viehstall, landwirtschaftlicher Teich und Kompostgrube;

Erhalten, über den einen oder die mehreren Hardwareprozessoren (108), von agroklimatischen (Agro-Climatic, AC) Zonendaten, die sich auf den landwirtschaftlichen Betrieb beziehen, aus einem Datenspeicher;

Berechnen, über den einen oder die mehreren Hardwareprozessoren (108), einer Know Your Customer Farm (KYCF)-Punktzahl unter Verwendung der landwirtschaftlichen Ressourcenkarte und der AC-Zonendaten, Georeferenzdaten des landwirtschaftlichen Betriebs, die Plotkarte, Breitengrad, Längengrad, Größe eines Landes, Art von Land wie bewässertes Land oder trockenes Land umfassen, einer digitalen Bodenkarte, die Art und Farbe des Bodens, Bodentestbericht, alkalischen oder sauren oder salzhaltigen Boden und gegenwärtiges oder vorheriges Erntemuster umfasst, das geeignete angebaute Ernte, Erntesorte umfasst, wobei die KYCF die Qualität des landwirtschaftlichen Betriebs angibt;

Empfangen, über den einen oder die mehreren Hardwareprozessoren (108), eines Satzes von sozioökonomischen Parametern und eines Satzes von soziopersönlichen Parametern des Landwirts über einen Fragebogen, wobei der Fragebogen vom Landwirt aufgefüllt wird;

**EP 4 145 375 B1**

Berechnen, über den einen oder die mehreren Hardwareprozessoren (108), einer Know Your Farmer (KYF)-Punktzahl für den Landwirt unter Verwendung des Satzes von sozioökonomischen Parametern und des Satzes von soziopersönlichen Parametern, wobei die KYF-Punktzahl die finanzielle Wertigkeit des Landwirts angibt;

Sammeln, über den einen oder die mehreren Hardwareprozessoren (108), eines ersten Satzes von Parametern aus einer Mehrzahl von Quellen, wobei der erste Satz von Parametern Erntemuster des landwirtschaftlichen Betriebs über einen vordefinierten Zeitraum, soziale Beteiligung des Landwirts, Erfahrung des landwirtschaftlichen Betriebs, Erfahrung im Bankwesen, informationssuchendes Verhalten des Landwirts, Marketingverhalten des Landwirts und landwirtschaftliches Wissen des Landwirts auf Grundlage einer Anzahl von vom Landwirt besuchten Schulungen umfasst;

Berechnen, über den einen oder die mehreren Hardwareprozessoren (108), einer Farmer Entrepreneurship Quality (FEQ)-Punktzahl unter Verwendung des ersten Satzes von Parametern, wobei die FEQ-Punktzahl die Fähigkeit des Landwirts angibt, das Darlehen zurückzuzahlen;

Berechnen, über den einen oder die mehreren Hardwareprozessoren (108), einer landwirtschaftlichen Kreditrisikopunktzahl in Echtzeit unter Verwendung der KYCF-Punktzahl, der KYF-Punktzahl und der FEQ-Punktzahl; und

Vergleichen, über den einen oder die mehreren Hardwareprozessoren (108), der berechneten landwirtschaftlichen Kreditrisikopunktzahl mit einem vordefinierten Kriterium, um die Kreditwürdigkeit des Landwirts und die mit dem landwirtschaftlichen Betrieb verbundenen Risiken als eines von einem hohen Risiko, einem mittleren Risiko oder einem niedrigen Risiko zu klassifizieren.

10. Ein oder mehrere nichtflüchtige maschinenlesbare Informationsspeichermedien nach Anspruch 9, wobei der Satz von soziopersönlichen Parametern Familiengröße des Landwirts, Familientyp des Landwirts, Bildungsqualifikation des Landwirts, primären Beruf des Landwirts, sekundären Beruf des Landwirts, weibliches Mitglied in der Familie und landwirtschaftliche Erfahrung umfasst.

11. Ein oder mehrere nichtflüchtige maschinenlesbare Informationsspeichermedien nach Anspruch 9, ferner umfassend das Empfehlen eines personalisierten Ernteprotokolls in Abhängigkeit vom klassifizierten Risiko.

12. Ein oder mehrere nichtflüchtige maschinenlesbare Informationsspeichermedien nach Anspruch 9, wobei der Satz von sozioökonomischen Parametern ein Set-Phone-Modell umfasst, wobei die ökonomischen Parameter des Landwirts Cashflow, Jahreseinkommen aus der Landwirtschaft, Jahreseinkommen aus nichtlandwirtschaftlichen Aktivitäten, Typ des Darlehens, das verfügbar ist, Darlehensgebührenbetrag und Darlehensausfall umfassen.

**Revendications**

1. Procédé mis en œuvre par processeur (300) pour évaluer la valeur de crédit d'un agriculteur et les risques associés à une ferme, le procédé comprenant :

la réception, par l'intermédiaire d'un ou plusieurs processeurs matériels (108), de données de satellite distant détectées à partir d'un ou plusieurs satellites (114) sur une période prédéfinie sur la ferme (302), dans lequel les un ou plusieurs satellites comprennent Sentinel-1, Sentinel-2, Landsat-5, Landsat-6 et Landsat-7 ;

la génération, par l'intermédiaire des un ou plusieurs processeurs matériels (108), d'une carte des ressources de la ferme à l'aide des données de satellite distant (304), dans lequel la carte des ressources de la ferme est une carte numérique des ressources générées pour comprendre le potentiel de production de culture de la ferme, et dans lequel la carte des ressources de la ferme comprend : (a) le type de sol et la terre appropriés pour l'agriculture, (b) la source d'eau, le type d'irrigation et le procédé d'irrigation, (c) l'étable de bétail, l'étang de la ferme et la fosse de compost ;

l'obtention, par l'intermédiaire des un ou plusieurs processeurs matériels (108), de données de zone agroclimatique (AC) relatives à la ferme à partir d'un référentiel de données (306) ;

le calcul, par l'intermédiaire des un ou plusieurs processeurs matériels (108), d'un score Know Your Customer Farm (KYCF) à l'aide de la carte des ressources de la ferme, des données de zone AC, des données de géoréférence de la ferme comprenant la carte des parcelles, la latitude, la longitude, la taille d'une terre, le type de terre comme une terre irriguée ou une terre sèche, une carte numérique du sol comprenant le type et la couleur du sol, un rapport d'essai du sol, un sol alcalin ou acide ou salin, et un modèle de culture présent ou antérieur comprenant une culture appropriée, une variété de culture, dans lequel le KYCF est indicatif de la qualité de la ferme (308) ;

**13**

la réception, par l'intermédiaire des un ou plusieurs processeurs matériels (108), d'un ensemble de paramètres socio-économiques et d'un ensemble de paramètres socio-personnels de l'agriculteur par l'intermédiaire d'un questionnaire, dans lequel le questionnaire est rempli par l'agriculteur (310) ;

le calcul, par l'intermédiaire des un ou plusieurs processeurs matériels (108), d'un score Know Your Farmer (KYF) pour l'agriculteur à l'aide de l'ensemble de paramètres socio-économiques et de l'ensemble de paramètres socio-personnels, dans lequel le score KYF est indicatif de la valeur financière de l'agriculteur (312) ;

la collecte, par l'intermédiaire des un ou plusieurs processeurs matériels (108), d'un premier ensemble de paramètres à partir d'une pluralité de sources, dans lequel le premier ensemble de paramètres comprend un modèle de culture de la ferme sur une période de temps prédéfinie, une participation sociale de l'agriculteur, une expérience agricole, une expérience bancaire, un comportement de recherche d'informations de l'agriculteur, un comportement de commercialisation de l'agriculteur et une connaissance agricole de l'agriculteur sur la base d'un certain nombre de formations assistées par l'agriculteur (314) ;

le calcul, par l'intermédiaire des un ou plusieurs processeurs matériels (108), d'un score Farmer Entrepreneurship Quality (FEQ) à l'aide du premier ensemble de paramètres, dans lequel le score FEQ est indicatif de la capacité de l'agriculteur à rembourser le prêt (316) ;

le calcul, par l'intermédiaire des un ou plusieurs processeurs matériels, d'un score de risque de crédit agricole en temps réel à l'aide du score KYCF, du score KYF et du score FEQ (318) ; et

la comparaison, par l'intermédiaire des un ou plusieurs processeurs matériels (108), du score de risque de crédit agricole calculé à un critère prédéfini pour classer la valeur de crédit de l'agriculteur et les risques associés à la ferme comme l'un d'un risque élevé, d'un risque moyen ou d'un risque faible (320).

2. Procédé selon la revendication 1, dans lequel l'ensemble de paramètres socio-personnels comprend la taille de la famille de l'agriculteur, le type de famille de l'agriculteur, la qualification éducative de l'agriculteur, l'occupation primaire de l'agriculteur, l'occupation secondaire de l'agriculteur, le membre féminin de la famille et l'expérience agricole.

3. Procédé selon la revendication 1, comprenant en outre la recommandation d'un protocole de culture personnalisé en fonction du risque classé.

4. Procédé selon la revendication 1, dans lequel l'ensemble de paramètres socio-économiques comprend un modèle de téléphone cellulaire, les paramètres économiques de l'agriculteur comprenant les flux de trésorerie, le revenu annuel de l'agriculture, le revenu annuel des activités non agricoles, le type de prêt disponible, le montant dû au prêt et le défaut de prêt.

5. Système (100) pour évaluer la valeur de crédit d'un agriculteur et les risques associés à une ferme, le système comprenant :

un ou plusieurs satellites (114) pour recevoir des données de satellite distant détectées sur une période prédéfinie sur la ferme, dans lequel les un ou plusieurs satellites (114) comprennent Sentinel-1, Sentinel-2, Landsat-5, Landsat-6 et Landsat-7 ;

une interface d'entrée/sortie (104) ;

un ou plusieurs processeurs matériels (108) ; et

une mémoire (110) en communication avec les un ou plusieurs processeurs matériels, dans lequel les un ou plusieurs premiers processeurs matériels sont configurés pour exécuter des instructions programmées stockées dans les une ou plusieurs premières mémoires, pour :

générer une carte des ressources de la ferme à l'aide des données de satellite distant, dans lequel la carte des ressources de la ferme est une carte numérique des ressources générées pour comprendre le potentiel de production de culture de la ferme, et dans lequel la carte des ressources de la ferme comprend : (a) le type de sol et la terre appropriés pour l'agriculture, (b) la source d'eau, le type d'irrigation et le procédé d'irrigation, (c) l'étable de bétail, l'étang de la ferme et la fosse de compost ;

obtenir des données de zone agroclimatique (AC) relatives à la ferme à partir d'un référentiel de données ;

calculer un score Know Your Customer Farm (KYCF) à l'aide de la carte des ressources de la ferme et des données de zone AC, des données de géoréférence de la ferme comprenant la carte des parcelles, la latitude, la longitude, la taille d'une terre, le type de terre comme une terre irriguée ou une terre sèche, une carte numérique du sol comprenant le type et la couleur du sol, un rapport d'essai du sol, un sol alcalin ou acide ou salin, et un modèle de culture présent ou antérieur comprenant une culture appropriée, une variété de culture, dans lequel le KYCF est indicatif de la qualité de la ferme ;

recevoir un ensemble de paramètres socio-économiques et un ensemble de paramètres socio-personnels de l'agriculteur par l'intermédiaire d'un questionnaire, dans lequel le questionnaire est rempli par l'agriculteur ;

calculer un score Know Your Farmer (KYF) pour l'agriculteur à l'aide de l'ensemble de paramètres socio-économiques et de l'ensemble de paramètres socio-personnels, dans lequel le score KYF est indicatif de la valeur financière de l'agriculteur ;

collecter un premier ensemble de paramètres à partir d'une pluralité de sources, dans lequel le premier ensemble de paramètres comprend un modèle de culture de la ferme sur une période de temps prédéfinie, une participation sociale de l'agriculteur, une expérience agricole, une expérience bancaire, un comportement de recherche d'informations de l'agriculteur, un comportement de commercialisation de l'agriculteur et une connaissance agricole de l'agriculteur sur la base d'un certain nombre de formations assistées par l'agriculteur ;

calculer un score Farmer Entrepreneurship Quality (FEQ) à l'aide du premier ensemble de paramètres, dans lequel le score FEQ est indicatif de la capacité de l'agriculteur à rembourser le prêt ;

calculer un score de risque de crédit agricole en temps réel à l'aide du score KYCF, du score KYF et du score FEQ ; et

comparer le score de risque de crédit agricole calculé à un critère prédéfini pour classer la valeur de crédit de l'agriculteur et les risques associés à la ferme comme l'un d'un risque élevé, d'un risque modéré ou d'un risque faible.

6. Système selon la revendication 5, dans lequel l'ensemble de paramètres socio-personnels comprend la taille de la famille de l'agriculteur, le type de famille de l'agriculteur, la qualification éducative de l'agriculteur, l'occupation primaire de l'agriculteur, l'occupation secondaire de l'agriculteur, le membre féminin de la famille et l'expérience agricole.

7. Système selon la revendication 5, configuré en outre pour fournir une recommandation pour suivre un protocole de culture personnalisé en fonction du risque classé.

8. Système selon la revendication 5, dans lequel l'ensemble de paramètres socio-économiques comprend un modèle de téléphone cellulaire, les paramètres économiques de l'agriculteur comprenant les flux de trésorerie, le revenu annuel de l'agriculture, le revenu annuel des activités non agricoles, le type de prêt disponible, le montant dû au prêt et le défaut de prêt.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par l'intermédiaire d'un ou plusieurs processeurs matériels (108), de données de satellite distant détectées à partir d'un ou plusieurs satellites (114) sur une période prédéfinie sur la ferme ;

la génération, par l'intermédiaire des un ou plusieurs processeurs matériels (108), d'une carte des ressources de la ferme à l'aide des données de satellite distant, dans lequel la carte des ressources de la ferme est une carte numérique des ressources générées pour comprendre le potentiel de production de culture de la ferme, et dans lequel la carte des ressources de la ferme comprend : (a) le type de sol et la terre appropriés pour l'agriculture, (b) la source d'eau, le type d'irrigation et le procédé d'irrigation, (c) l'étable de bétail, l'étang de la ferme et la fosse de compost ;

l'obtention, par l'intermédiaire des un ou plusieurs processeurs matériels (108), de données de zone agroclimatique (AC) relatives à la ferme à partir d'un référentiel de données ;

le calcul, par l'intermédiaire des un ou plusieurs processeurs matériels (108), d'un score Know Your Customer Farm (KYCF) à l'aide de la carte des ressources de la ferme et des données de zone AC, des données de géoréférence de la ferme comprenant la carte des parcelles, la latitude, la longitude, la taille d'une terre, le type de terre comme une terre irriguée ou une terre sèche, une carte numérique du sol comprenant le type et la couleur du sol, un rapport d'essai du sol, un sol alcalin ou acide ou salin, et un modèle de culture présent ou antérieur comprenant une culture appropriée, une variété de culture, dans lequel le KYCF est indicatif de la qualité de la ferme ;

la réception, par l'intermédiaire des un ou plusieurs processeurs matériels (108), d'un ensemble de paramètres socio-économiques et d'un ensemble de paramètres socio-personnels de l'agriculteur par l'intermédiaire d'un questionnaire, dans lequel le questionnaire est rempli par l'agriculteur ;

le calcul, par l'intermédiaire des un ou plusieurs processeurs matériels (108), d'un score Know Your Farmer (KYF) pour l'agriculteur à l'aide de l'ensemble de paramètres socio-économiques et de l'ensemble de paramètres socio-personnels, dans lequel le score KYF est indicatif de la valeur financière de l'agriculteur ;

la collecte, par l'intermédiaire des un ou plusieurs processeurs matériels (108), d'un premier ensemble de paramètres à partir d'une pluralité de sources, dans lequel le premier ensemble de paramètres comprend un modèle de culture de la ferme sur une période de temps prédéfinie, une participation sociale de l'agriculteur, une expérience agricole, une expérience bancaire, un comportement de recherche d'informations de l'agriculteur, un comportement de commercialisation de l'agriculteur et une connaissance agricole de l'agriculteur sur la base d'un certain nombre de formations assistées par l'agriculteur ;

le calcul, par l'intermédiaire des un ou plusieurs processeurs matériels (108), d'un score Farmer Entrepreneurship Quality (FEQ) à l'aide du premier ensemble de paramètres, dans lequel le score FEQ est indicatif de la capacité de l'agriculteur à rembourser le prêt ;

le calcul, par l'intermédiaire des un ou plusieurs processeurs matériels (108), d'un score de risque de crédit agricole en temps réel à l'aide du score KYCF, du score KYF et du score FEQ ; et

la comparaison, par l'intermédiaire des un ou plusieurs processeurs matériels (108), du score de risque de crédit agricole calculé à un critère prédéfini pour classer la valeur de crédit de l'agriculteur et les risques associés à la ferme comme l'un d'un risque élevé, d'un risque moyen ou d'un risque faible.

10. Un ou plusieurs supports de stockage d'informations lisibles par machine non transitoires selon la revendication 9, dans lequel l'ensemble de paramètres socio-personnels comprend la taille de la famille de l'agriculteur, le type de famille de l'agriculteur, la qualification éducative de l'agriculteur, l'occupation primaire de l'agriculteur, l'occupation secondaire de l'agriculteur, le membre féminin de la famille et l'expérience agricole.

11. Un ou plusieurs supports de stockage d'informations lisibles par machine non transitoires selon la revendication 9, comprenant en outre la recommandation d'un protocole de culture personnalisé en fonction du risque classé.

12. Un ou plusieurs supports de stockage d'informations lisibles par machine non transitoires selon la revendication 9, dans lequel l'ensemble de paramètres socio-économiques comprend un modèle de téléphone cellulaire, les paramètres économiques de l'agriculteur comprenant les flux de trésorerie, le revenu annuel de l'agriculture, le revenu annuel des activités non agricoles, le type de prêt disponible, le montant dû au prêt et le défaut de prêt.

FIG. 1

100

| KYCF | AC zone data | KYF | | FEQ |

| Land suitability index<br>Cropping system index<br>Soil suitability index<br>Water availability index | Economic condition index<br>Farming experience index<br>Labor and mechanization<br>Govt. policies | Expected profit / loss<br>Technology suitability<br>Market and infra<br>Social participation<br>Cosmopolite-ness index<br>Availability of inputs<br>Training attended |

Farm credit risk score

Risk wise personalized crop protocol

Loan underwriting and disbursement

FIG. 2

300

Receive a remote satellite data sensed from one or more satellites over a predefined period over the farm —302

Generate a farm resource map using the remote satellite data —304

Obtain an agro-climatic (AC) zone data respective to the farm from a data repository —306

Calculate a Know Your Customer Farm (KYCF) score using the farm resource map and the AC zone data, wherein the KYCF is indicative of quality of the farm —308

Receive a set of socioeconomic parameters and a set of socio-personal parameters of the farmer via a questionnaire, wherein the questionnaire is filled up by the farmer —310

Calculate a Know Your Farmer (KYF) score for the farmer using the set of socioeconomic parameters and the set of socio-personal parameters, wherein the KYF score indicative of the financial worthiness of the farmer —312

Collect a first set of parameters from a plurality of sources, wherein the first set of parameters comprises cropping pattern of the farming over a predefined time period, social participation of the farmer, experience of farming, experience in banking, information seeking behaviour of the farmer, marketing behaviour of the farmer and a farming knowledge of the farmer based on a number of trainings attended by the farmer —314

Calculate a Farmer entrepreneurship Quality (FEQ) score using the first set of parameters, wherein the FEQ score is indicative of the ability of the farmer to repay the loan —316

Calculate a farm credit risk score in real time using the KYCF score, the KYF score and the FEQ score —318

Compare the calculated farm credit risk score with a predefined criteria to classify the credit worthiness of the farmer and risk associated with the farm as one of a high risk, a medium risk or a low risk —320

FIG. 3

**REFERENCES CITED IN THE DESCRIPTION**

**Patent documents cited in the description**

- IN 202121039875